# EUROPEAN PATENT SPECIFICATION

(11) **EP 2 631 596 B1**
(45) Date of publication and mention of the grant of the patent: **03.04.2019**
(21) Application number: 12001177.0
(22) Date of filing: 22.02.2012
(51) Int. Cl.: G01C 21/36

(54) **Navigation method and corresponding navigation system**
Navigationsverfahren und entsprechendes Navigationssystem
Procédé de navigation et système de navigation correspondant

(43) Date of publication of application: 28.08.2013
(73) Proprietor: Harman Becker Automotive Systems GmbH, 76307 Karlsbad (DE)
(72) Inventor: Hansen, Lars, 80939 München (DE)
(74) Representative: Grünecker Patent- und Rechtsanwälte PartG mbB

(56) References cited:
- JP-A- 2004 333 467
- JP-A- 2008 002 965
- US-A1- 2005 149 262

## Description

The invention relates to a navigation method and a navigation system.
JP 2004 333467 A discloses a navigation method comprising determining a route, displaying the route on a map, determining a maneuver point on the route, outputting a maneuver instruction for the maneuver point, representing a current position on the route by a position symbol of the vehicle on the map, determining a junction between the position symbol and the maneuver point and marking a road branching off said junction with a cross mark.

JP 2008 002965 A discloses a navigation method comprising determining a route, displaying the route on a map, determining a maneuver point on the route, and outputting a maneuver instruction for the maneuver point. A junction before the maneuver point can be marked with a cross symbol for indicating that no turn should be made at said junction.

US 2005/149262 A1 discloses a navigation method comprising displaying a route with a next guidance intersection and differently colored intermediate intersections.

EP1544829A1 shows a navigation system and navigation method. A navigation system having a function of alerting the driver to potential wrong way driving comprises means for determining a position of a vehicle, means for calculating a driving route of the vehicle, means for determining a driving maneuver in accordance with the predetermined driving route, means for outputting indications relating to the determined driving maneuver to a driver of the vehicle, and means for alerting the driver to potential wrong way driving including means for detecting a potential wrong way driving situation and means for outputting an indication relating to the potential wrong way driving situation to the driver.

The object of the invention is to provide a method which is improved as much as possible.

The object is achieved by a navigation method having the features of claim 1. Thus, it is provided a navigation method for a vehicle comprising the steps: determining a route; displaying the route on a map; determining a maneuver point on the route; outputting a maneuver instruction for the maneuver point; representing a current position on the route by a position symbol of the vehicle on the map, determining a plurality of junctions between the position symbol and the maneuver point on the route; determining a plurality of roads branching off the route at said plurality of junctions; marking each of said plurality of roads by a blocking flag on the map; for each of said plurality of junctions: determining whether the vehicle has passed the junction; and changing the corresponding blocking flag on the map by deleting or hiding it, so that the blocking flag is changed as soon as the vehicle has passed the junction.

Advantageous embodiments of the invention are the subject matter of dependent claims and are included in the description.

Multiple advantages are achieved by a specific embodiment of the invention, explained in relation to the figures. The blocking flag gives a driver additional orientation where he must leave the current road. By changing the blocking flag, the driver may more easily compare the position on the map with the real vehicle surroundings.

A further object of the invention is to specify a navigation system which is improved as much as possible.

This object is achieved by the navigation system having the features of claim 6. Advantageous refinements are included in the description. A navigation system is therefore provided which comprises an arithmetic unit; a position determining unit connectable to the arithmetic unit; a memory connectable to the arithmetic unit; and an optical display connectable to the arithmetic unit, wherein the position determining unit is configured to determine a current position; wherein the arithmetic unit is configured to determine a route based on road data stored in the memory; wherein the arithmetic unit and the display are configured to display the route on a map; wherein the arithmetic unit is configured to determine a maneuver point on the route; wherein the arithmetic unit and the display are configured to output a maneuver instruction for the maneuver point; wherein the arithmetic unit and the display are configured to display the current position on the route by means of a position symbol of the vehicle on the map, wherein the arithmetic unit is configured to determine a plurality of junctions between the position symbol and the maneuver point on the route; wherein the arithmetic unit is configured to determine a plurality of roads branching off the route at said plurality of junctions; wherein the arithmetic unit and the display are configured to mark each of said plurality of roads by means of a blocking flag on map; wherein the arithmetic unit and the position determining unit are configured to determine whether the vehicle has passed the junction for each of said plurality of junction; and wherein the arithmetic unit and the display are configured to change the corresponding blocking flag on the map, by deleting or hiding it, so that the blocking flag is changed as soon as the vehicle has passed the junction, for each of said plurality of junction.

The embodiments explained below relate to both the navigation method and the navigation system. Functional features may be derived from method features and vice versa.

The route is determined from a starting point, for example a position determined with the aid of a GPS receiver, to a destination point. For example, the route is an ordered list of path points which describe the precise path from the starting point to the destination point. If the route guidance requires the driver to make a turn from a road, the maneuver point for the turn is determined. A plurality of maneuver points may be required for a route.

The maneuver instruction for the maneuver point has an acoustic and/or optical output. For example, an arrow representation is used as a maneuver instruction on the map. For example, a turn-by-turn representation of the maneuver instruction may be realized by a maneuver symbol.

The position symbol displayed on the map has an arrow, for example. Alternatively, the position symbol may also be embodied as a vehicle. The position symbol preferably enables a driver to visualize the vehicle's current position on the map, the current position being determined from a coordinate which is obtained, for example, from GPS satellite signals.

A road is understood to be any area that may be used for traffic, for example city streets, country roads, paths, highways; bicycle paths and the like. A junction is understood to be any type of accessible turns, for example intersections, highway exits and the like.

According to an embodiment, the blocking flag is displayed by a blocking symbol. The blocking symbol is advantageously displayed on the associated road in the area of the junction. The blocking symbol is advantageously displayed as an element on a representation plane above the road. The blocking symbol is, for example, an X or a traffic road sign. Alternatively, the blocking flag is displayed by a change in the associated road, in particular by coloring the road at least partially. Alternatively, the blocking flag is displayed in that the corresponding road comprises a gap. Different blocking flag types can be combined with each other.

According to an advantageous embodiment, it is provided that, if there is a right turn at the maneuver point, the road of the preceding junction is marked by the blocking flag only if the road permits a right turn. If the road permits only a left turn, on the other hand, no blocking flag is set.

If a left turn is provided at the maneuver point, the road of the preceding junction is marked by the blocking flag only if the road permits a left turn. If the road permits only a right turn, on the other hand, no blocking flag is set. Depending on the maneuver instruction being a left turn or right turn, blocking flags of junctions on either side preceding the maneuver point are preferably different. It is also possible to have identical blocking flags on both sides. Preferably only a limited (fixed or presettable) number of blocking flags are shown, being next to the current position on the map. Each time a junction is passed, a new blocking flag is set marking a new junction until the maneuver point is reached.

In an embodiment, the passing is determined by comparing, in particular continuously comparing, a coordinate of the current position with the junction. For example, if the coordinate of the current position is located before a junction point of the junction in the direction of travel along the route, no passing has yet taken place. If the coordinate of the current position is located after the junction point of the junction in the direction of travel along the route, the passing has, for example, already taken place.

The invention is explained in greater detail below with reference to the drawings. The illustrated embodiments are highly schematic, i.e., the distances and lateral and vertical extensions are not true to scale and, unless otherwise indicated, do not have a derivable geometric relation to each other. In the drawings,
- Figure 1: shows a first schematic view of a map section;
- Figure 2: shows a second schematic view of the map section; and
- Figure 3: shows a schematic view of a navigation system.

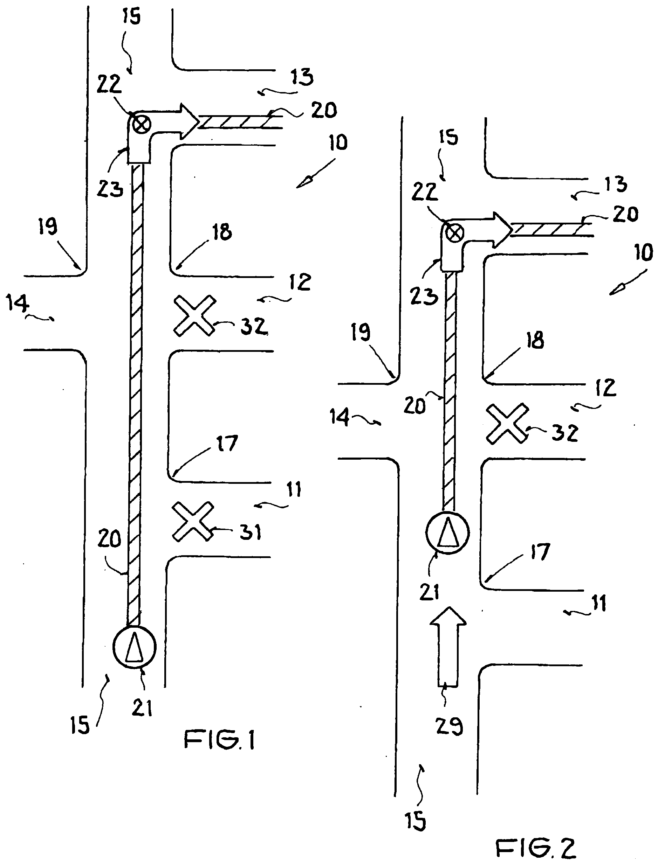

The illustration in Figure 1 shows a first schematic view of a section of a map 10, which may be represented by a navigation system. The section of map 10 shows roads 11, 12, 13, 14, 15 and turns 17, 18, 19, whereby roads 11, 12, 13 and 14 branch off road 15.

A section of a calculated route 20 is illustrated on map 10. Route 20 includes geographic points, which are to be approached in a defined order. Route 20 has a maneuver point 22, which is illustrated in Figure 1 but which may not be displayed in the map representation of a navigation system. As an example a maneuver instruction 23 in the form of a directional arrow 23 is furthermore displayed in the map representation in Figure 1. The Maneuver instruction 23 is associated with maneuver point 22. In addition or alternatively, the maneuver instruction includes other optical or acoustic outputs, for example a voice output or a zoom in showing a map view of the junction of the maneuver only. A position symbol 21 is furthermore displayed in the map representation in Figure 1. In the exemplary embodiment in Figure 1, the position of position symbol 21 on map 10 is determined on the basis of received GPS satellite signals.

Blocking flags 31, 32, which help avoid turning off too soon before maneuver 23, are also displayed on the map in Figure 1. Blocking flags 31, 32 are used to point out that the driver should not turn at the junctions 11, 12 located before maneuver point 22. Blocking flags 31, 32 are set at road 11, 12 on map 10 in Figure 1. Blocking flags 31, 32 are deleted as soon as the vehicle has passed them.

A second vehicle position is illustrated schematically on map 10 in the illustration in Figure 2. In Figure 2, the position of position symbol 21 is located between road 11 and road 12, so that the vehicle has already passed road 11. Completed passing 29 is indicated by arrow 29 schematically.

Blocking flag 31 on road 11 on map 10 is changed when passing 29 occurs. The blocking flag 31 is changed by hiding blocking flag 31, as indicated in Figure 2. A driver of a vehicle may thus verify the passing at junction 17 coincidently with hiding blocking flag 31, thus improving a clarity of the route guidance. After another passing at further junction 18, further blocking symbol 32 is also hidden (not illustrated in Figure 2), so that the driver may easily visualize the fact that the ability to turn onto road 13 should be used.

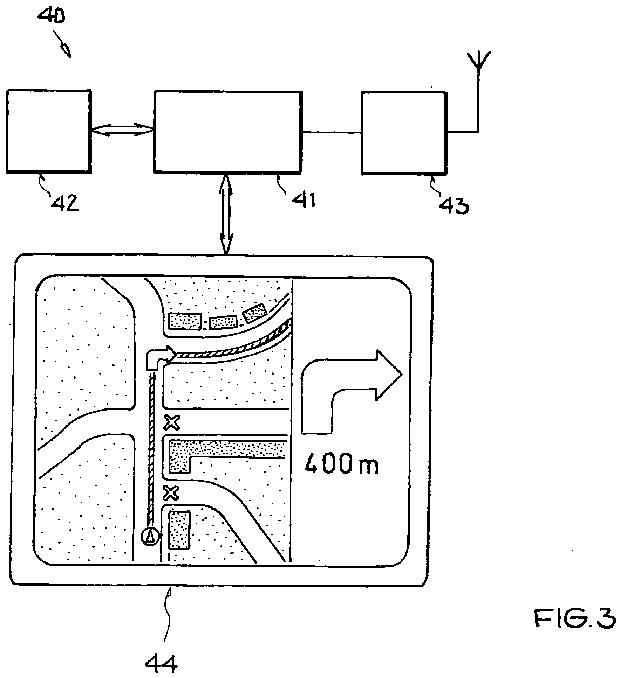

A schematic view of a navigation system 40 is shown in Figure 3. Navigation system 40 has an optical display 44 and an arithmetic unit 41 and a memory 42 and a position determining unit 43. The display 44 is, for example, a touch screen or a projector. The arithmetic unit 41 is, for example, a signal and/or data processor or a microcontroller. The position determining unit 43 is, for example, a GPS receiver. The memory 42 is, for example, a hard disk or a semiconductor memory and is preferably structured as a database. The arithmetic unit 41 is connected to the memory 42, the display 44 and the position determining unit 43.

Navigation system 40 is configured to:
- determine a current position by means of the position determining unit 43;
- determine a route 20 based on road data stored in the memory 42 by means of the arithmetic unit 41;
- display a route 20 on a map 10 by means of the display 44;
- determine a maneuver point 22 on the route 20 by means of the arithmetic unit 41;
- output a maneuver instruction 23 for the maneuver point 22 via the display 44;
- display the current position on the route 20 by means of a position symbol 21 on map 10 by means of the display 44;
- determine a junction 17, 18 between the position symbol 21 and the maneuver point 22 on route 20 by means of the arithmetic unit 41;
- determine a road 11, 12 branching off the route 20 at junction 17, 18, by means of the arithmetic unit 41;
- mark road 11, 12 by means of a blocking flag 31, 32 on map 10 by the arithmetic unit 41 outputting the blocking flag 31, 32 via the display 44;
- determine a passing 29 at junction 17, 18, wherein the position determining unit 43 is configured to determine a coordinate, wherein the arithmetic unit 41 is configured to compare database entries in memory 42 with the coordinate; and
- change the blocking flag 31, 32 on the map 10 as a function of the passing 29 by means of the arithmetic unit 41.

Since navigation system 40 must give the driver a certain amount of lead time to initiate a turning maneuver, the blocking flags visualize the fact that the driver should not turn too soon. Turning too soon would result in a circuitous route, which may be prevented by the functionality explained above. For example all turns 17, 18 are marked by blocking symbol 31, 32, for example a red X, at a distance of, for example, 500 meters on map 10, so that it is apparent that the driver should not turn at these points.

The invention is not limited to the shown embodiment variants of Figures 1 through 3. For example, it is possible to set the blocking flag on a number of junction roads next to the current position of the vehicle and setting new blocking flags concurrently approaching the maneuver point until the maneuver point is reached. It is also possible to limit the number of blocking flags to a fixed or adjustable amount. For example only the roads of the last ten junctions preceding the maneuver point are marked with a blocking flag. The navigation system is preferably used in a motor vehicle.

## Claims

1. A navigation method for a vehicle comprising the steps of:
- determining a route (20);
- displaying the route (20) on a map (10);
- determining a maneuver point (22) on the route (20);
- outputting a maneuver instruction (23) for the maneuver point (22);
- representing a current position on the route (20) by a position symbol (21) of the vehicle on the map (10),
- determining a plurality of junctions (17, 18) between the position symbol (21) and the maneuver point (22) on the route (20);
- determining a plurality of roads (11, 12) branching off the route (20) at said plurality of junctions (17, 18);
- marking each of said plurality of roads (11, 12) by a blocking flag (31, 31) on the map (10), wherein a blocking flag indicates that the driver of the vehicle should not turn at the junction;
- for each of said plurality of junctions:
- determining whether the vehicle has passed (29) the junction (17, 18); and
- changing the corresponding blocking flag (31, 32) on the map (10) by deleting or hiding it, so that the blocking flag (31, 32) is changed as soon as the vehicle has passed the junction (17, 18).

2. The navigation method according to claim 1,
- wherein the blocking flag (31, 32) is indicated by a blocking symbol (31, 32).

3. The method according to one of the preceding claims,
- wherein, when turning right at the maneuver point (22), the road (11, 12) is marked by the blocking flag (31, 32) if the road (11, 12) permits a right turn;
and/or
- wherein, when turning left at the maneuver point, the road is marked by the blocking mark if the road permits a left turn.

4. The method according to one of the preceding claims,
- wherein a limited number of blocking flags (31, 32) are shown, being next to the current position on the map
and/or
- wherein each time a junction (17, 18) is passed, a new blocking flag is set marking a new junction until the maneuver point (22) is reached.

5. The method according to one of the preceding claims,
- wherein the passing (29) is determined by comparing a coordinate of the current position with the junction (17).

6. A navigation system (40) of a vehicle
- having an arithmetic unit (41);
- having a position determining unit (43) connectable to the arithmetic unit (41);
- having a memory (42) connectable to the arithmetic unit (41); and
- having an optical display (44) connectable to the arithmetic unit (41),
- wherein the position determining unit (43) is configured to determine a current position;
- wherein the arithmetic unit (41) is configured to determine a route (20) based on road data stored in the memory (42);
- wherein the arithmetic unit (41) and the display (44) are configured to display the route (20) on a map (10);
- wherein the arithmetic unit (41) is configured to determine a maneuver point (22) on the route (20);
- wherein the arithmetic unit (41) and the display (44) are configured to output a maneuver instruction (23) for the maneuver point (22);
- wherein the arithmetic unit (41) and the display (44) are configured to display the current position on the route (20) by means of a position symbol (21) of the vehicle on the map (10),
- wherein the arithmetic unit (41) is configured to determine a plurality of junctions (17, 18) between the position symbol (21) and the maneuver point (22) on the route (20);
- wherein the arithmetic unit (41) is configured to determine a plurality of roads (11, 12) branching off the route (20) at said plurality of junctions (17, 18);
- wherein the arithmetic unit (41) and the display (44) are configured to mark each of said plurality of roads (11, 12) by means of a blocking flag (31, 32) on the map (10), wherein a blocking flag indicates that the driver of the vehicle should not turn at the junction;
- wherein the arithmetic unit (41) and the position determining unit (43) are configured to determine whether the vehicle has passed the junction (17, 18) for each of said plurality of junctions; and
- wherein the arithmetic unit (41) and the display (44) are configured to change the corresponding blocking flag (31, 32) on the map (10), by deleting or hiding it, so that the blocking flag (31, 32) is changed as soon as the vehicle has passed the junction (17, 18), for each of said plurality of junctions.

## Patentansprüche

1. Navigationsverfahren für ein Fahrzeug, folgende Schritte umfassend:
- Bestimmen einer Route (20);
- Anzeigen der Route (20) auf einer Karte (10);
- Bestimmen eines Manövrierpunkts (22) auf der Route (20);
- Ausgeben einer Manövrieranweisung (23) für den Manövrierpunkt (22) ;
- Darstellen einer aktuellen Position auf der Route (20) durch ein Positionssymbol (21) des Fahrzeugs auf der Karte (10),
- Bestimmen einer Vielzahl von Kreuzungen (17, 18) zwischen dem Positionssymbol (21) und dem Manövrierpunkt (22) an der Route (20) ;
- Bestimmen einer Vielzahl von Straßen (11, 12), die an der Vielzahl von Kreuzungen (17, 18) von der Route (20) abzweigen;
- Markieren jeder der Vielzahl von Straßen (11, 12) durch eine Sperrungsflagge (31, 31) auf der Karte (10), wobei eine Sperrungsflagge angibt, dass der Fahrer des Fahrzeugs an der Kreuzung nicht abbiegen sollte;
- für jede der Vielzahl von Kreuzungen:
- Bestimmen, ob das Fahrzeug die Kreuzung (17, 18) passiert hat (29); und
- Ändern der entsprechenden Sperrungsflagge (31, 32) auf der Karte (10) durch Löschen oder Verbergen derselben, sodass die Sperrungsflagge (31, 32) geändert wird, sobald das Fahrzeug die Kreuzung (17, 18) passiert hat.

2. Navigationsverfahren nach Anspruch 1,
- wobei die Sperrungsflagge (31, 32) durch ein Sperrungssymbol (31, 32) angegeben wird.

3. Verfahren nach einem der vorangehenden Ansprüche,
- wobei die Straße (11, 12) beim Rechtsabbiegen am Manövrierpunkt (22) mit der Sperrungsflagge (31, 32) markiert wird, wenn die Straße (11, 12) ein Rechtsabbiegen zulässt; und/oder
- wobei die Straße beim Linksabbiegen am Manövrierpunkt mit der Sperrungsmarkierung markiert wird, wenn die Straße ein Linksabbiegen zulässt.

4. Verfahren nach einem der vorangehenden Ansprüche,
- wobei eine begrenzte Anzahl von Sperrungsflaggen (31, 32) gezeigt wird, die sich neben der aktuellen Position auf der Karte befinden,
und/oder
- wobei bei jedem Passieren einer Kreuzung (17, 18) eine neue Sperrungsflagge gesetzt wird, die eine neue Kreuzung markiert, bis der Manövrierpunkt (22) erreicht wird.

5. Verfahren nach einem der vorangehenden Ansprüche,
- wobei das Passieren (29) durch Vergleichen einer Koordinate der aktuellen Position mit der Kreuzung (17) bestimmt wird.

6. Navigationssystem (40) eines Fahrzeugs
- mit einer Arithmetikeinheit (41);
- mit einer Positionsbestimmungseinheit (43), die mit der Arithmetikeinheit (41) verbindbar ist;
- mit einem Speicher (42), der mit der Arithmetikeinheit (41) verbindbar ist; und
- mit einer optischen Anzeige (44), die mit der Arithmetikeinheit (41) verbindbar ist,
- wobei die Positionsbestimmungseinheit (43) dazu konfiguriert ist, eine aktuelle Position zu bestimmen;
- wobei die Arithmetikeinheit (41) dazu konfiguriert ist, auf Grundlage von Straßendaten, die im Speicher (42) gespeichert sind, eine Route (20) zu bestimmen;
- wobei die Arithmetikeinheit (41) und die Anzeige (44) dazu konfiguriert sind, die Route (20) auf einer Karte (10) anzuzeigen;
- wobei die Arithmetikeinheit (41) dazu konfiguriert ist, einen Manövrierpunkt (22) auf der Route (20) zu bestimmen;
- wobei die Arithmetikeinheit (41) und die Anzeige (44) dazu konfiguriert sind, eine Manövrieranweisung (23) für den Manövrierpunkt (22) auszugeben;
- wobei die Arithmetikeinheit (41) und die Anzeige (44) dazu konfiguriert sind, die aktuelle Position auf der Route (20) mittels eines Positionssymbols (21) des Fahrzeugs auf der Karte (10) anzuzeigen,
- wobei die Arithmetikeinheit (41) dazu konfiguriert ist, eine Vielzahl von Kreuzungen (17, 18) zwischen dem Positionssymbol (21) und dem Manövrierpunkt (22) auf der Route (20) zu bestimmen;
- wobei die Arithmetikeinheit (41) dazu konfiguriert ist, eine Vielzahl von Straßen (11, 12) zu bestimmen, die an der Vielzahl von Kreuzungen (17, 18) von der Route (20) abzweigen;
- wobei die Arithmetikeinheit (41) und die Anzeige (44) dazu konfiguriert sind, jede der Vielzahl von Straßen (11, 12) mittels einer Sperrungsflagge (31, 32) auf der Karte (10) zu markieren, wobei eine Sperrungsflagge angibt, dass der Fahrer des Fahrzeugs an der Kreuzung nicht abbiegen sollte;
- wobei die Arithmetikeinheit (41) und die Positionsbestimmungseinheit (43) dazu konfiguriert sind, für jede der Vielzahl von Kreuzungen zu bestimmen, ob das Fahrzeug die Kreuzung (17, 18) passiert hat, und
- wobei die Arithmetikeinheit (41) und die Anzeige (44) dazu konfiguriert sind, für jede der Vielzahl von Kreuzungen die entsprechende Sperrungsflagge (31, 32) auf der Karte (10) durch Löschen oder Verbergen derselben zu ändern, sodass die Sperrungsflagge (31, 32) geändert wird, sobald das Fahrzeug die Kreuzung (17, 18) passiert hat.

## Revendications

1. Procédé de navigation pour un véhicule, comprenant les étapes de :
- détermination d'un itinéraire (20) ;
- affichage de l'itinéraire (20) sur une carte (10) ;
- détermination d'un point de manoeuvre (22) sur l'itinéraire (20) ;
- génération d'une instruction de manoeuvre (23) pour le point de manoeuvre (22) ;
- représentation d'une position actuelle sur l'itinéraire (20) par un symbole de position (21) du véhicule sur la carte (10),
- détermination d'une pluralité d'intersections (17, 18) entre le symbole de position (21) et le point de manoeuvre (22) sur l'itinéraire (20) ;
- détermination d'une pluralité de routes (11, 12) croisant l'itinéraire (20) au niveau de ladite pluralité d'intersections (17, 18) ;
- marquage de chacune de ladite pluralité de routes (11, 12) par un repère de blocage (31, 31) sur la carte (10), dans lequel un repère de blocage indique que le conducteur du véhicule ne doit pas tourner au niveau de l'intersection ;
- pour chacune de ladite pluralité d'intersections :
- le fait de déterminer si le véhicule a franchi (29) l'intersection (17, 18) ou non, ; et
- modification du repère de blocage (31, 32) correspondant sur la carte (10) en le supprimant ou en le masquant, de sorte que le repère de blocage (31, 32) est modifié dès que le véhicule a franchi l'intersection (17, 18).

2. Procédé de navigation selon la revendication 1,
- dans lequel le repère de blocage (31, 32) est indiqué par un symbole de blocage (31, 32).

3. Procédé selon l'une des revendications précédentes,
- dans lequel, au moment de tourner à droite au niveau du point de manoeuvre (22), la route (11, 12) est marquée par le repère de blocage (31, 32) si la route (11, 12) permet de tourner à droite ;
et/ou
- dans lequel, au moment de tourner à gauche au niveau du point de manoeuvre, la route est marquée par la marque de blocage si la route permet de tourner à gauche.

4. Procédé selon l'une des revendications précédentes,
- dans lequel un nombre limité de repères de blocage (31, 32) sont indiqués, se trouvant après la position actuelle sur la carte
et/ou
- dans lequel, à chaque fois qu'une intersection (17, 18) est franchie, un nouveau repère de blocage est défini, marquant une nouvelle intersection jusqu'à ce que le point de manoeuvre (22) soit atteint.

5. Procédé selon l'une des revendications précédentes,
- dans lequel le franchissement (29) est déterminé en comparant une coordonnée de la position actuelle avec l'intersection (17).

6. Système de navigation (40) d'un véhicule
- possédant une unité arithmétique (41) ;
- possédant une unité de détermination de position (43) pouvant être connectée à l'unité arithmétique (41) ;
- possédant une mémoire (42) pouvant être connectée à l'unité arithmétique (41) ; et
- possédant un écran optique (44) pouvant être connecté à l'unité arithmétique (41),
- dans lequel l'unité de détermination de position (43) est configurée pour déterminer une position actuelle ;
- dans lequel l'unité arithmétique (41) est configurée pour déterminer un itinéraire (20) sur la base des données de route enregistrées dans la mémoire (42) ;
- dans lequel l'unité arithmétique (41) et l'écran (44) sont configurés pour afficher l'itinéraire (20) sur une carte (10) ;
- dans lequel l'unité arithmétique (41) est configurée pour déterminer un point de manoeuvre (22) sur l'itinéraire (20) ;
- dans lequel l'unité arithmétique (41) et l'écran (44) sont configurés pour générer une instruction de manoeuvre (23) pour le point de manoeuvre (22) ;
- dans lequel l'unité arithmétique (41) et l'écran (44) sont configurés pour afficher la position actuelle sur l'itinéraire (20) au moyen d'un symbole de position (21) du véhicule sur la carte (10),
- dans lequel l'unité arithmétique (41) est configurée pour déterminer une pluralité d'intersections (17, 18) entre le symbole de position (21) et le point de manoeuvre (22) sur l'itinéraire (20) ;
- dans lequel l'unité arithmétique (41) est configurée pour déterminer une pluralité de routes (11, 12) croisant l'itinéraire (20) au niveau de ladite pluralité d'intersections (17, 18) ;
- dans lequel l'unité arithmétique (41) et l'écran (44) sont configurés pour marquer chacune de ladite pluralité de routes (11, 12) au moyen d'un repère de blocage (31, 32) sur la carte (10), dans lequel un repère de blocage indique que le conducteur du véhicule ne doit pas tourner au niveau de l'intersection ;
- dans lequel l'unité arithmétique (41) et l'unité de détermination de position (43) sont configurées pour déterminer si le véhicule a franchi l'intersection (17, 18) ou non pour chacune de ladite pluralité d'intersections ; et
- dans lequel l'unité arithmétique (41) et l'écran (44) sont configurés pour modifier le repère de blocage (31, 32) correspondant sur la carte (10), en le supprimant ou en le masquant, de sorte que le repère de blocage (31, 32) est modifié dès que le véhicule a franchi l'intersection (17, 18), pour chacune de ladite pluralité d'intersections.
